# EUROPEAN PATENT SPECIFICATION

(11) **EP 1 631 022 B1**
(45) Date of publication and mention of the grant of the patent: **11.06.2014**
(21) Application number: 05255120.7
(22) Date of filing: 18.08.2005
(51) Int. Cl.: H04M 1/253, H04L 29/06, H04M 7/00, H04W 72/12, H04W 84/22

(54) **Extended voice over internet protocol over Bluetooth**
Extended voice over internet protocol über Bluetooth
Extended voice over internet protocol sur Bluetooth

(30) Priority: 23.08.2004 US 923977
(43) Date of publication of application: 01.03.2006
(73) Proprietor: Alcatel Lucent, 75007 Paris (FR)
(72) Inventor: Battaglia, Frederic, Middletown New Jersey 07748 (US); Samuel, Louis Gwyn, Common Platt Swindon Wiltshire SN5 5DQ (GB); Sizer, Theodore, Little Silver Monmouth NJ 07739-1102 (US)
(74) Representative: Wetzel, Emmanuelle

(56) References cited:
- WO-A-03/096633
- BILAN A P P S: "Streaming audio over bluetooth ACL links" INFORMATION TECHNOLOGY: CODING AND COMPUTING [COMPUTERS AND COMMUNICATIONS], 2003. PROCEEDINGS. ITCC 2003. INTERNATIONAL CONFERENCE ON APRIL 28-30, 2003, PISCATAWAY, NJ, USA,IEEE, 28 April 2003 (2003-04-28), pages 287-291, XP010638632 ISBN: 0-7695-1916-4
- "Telecommunications and Internet Protocol Harmonization Over Networks (TIPHON); General aspects of Quality of Service (QoS); TR 101 329" ETSI STANDARDS, EUROPEAN TELECOMMUNICATIONS STANDARDS INSTITUTE, SOPHIA-ANTIPO, FR, vol. TIPHON-5, no. V311, May 1999 (1999-05), XP014018868 ISSN: 0000-0001
- UDANI S ET AL: "OVERVIEW OF VOICE OVER IP" TECHNICAL REPORT, February 2001 (2001-02), XP002317816

## Description

### BACKGROUND OF THE INVENTION

### 1. FIELD OF THE INVENTION

This invention relates generally to telecommunication systems, and, more particularly, to wireless telecommunication systems.

### 2. DESCRIPTION OF THE RELATED ART

Generally, voice and data may be transmitted over wired and/or wireless networks using two basic switching technologies. Traditional voice telephone calls, as well as data provided by a modem, are transmitted using a circuit-switched connection. Alternatively, voice and data may be transmitted over a packet-switched network using a Voice over Internet Protocol (often referred to as VoIP). Both the circuit-switched and the packet-switched networks may include wired and/or wireless connections. The Voice over Internet Protocol is increasingly common, at least in part because VoIP can handle voice and data communications homogeneously. Moreover, transmitting voice with VolP may help reduce operational costs. In addition to conventional land-line telephones and cellular telephones, VoIP may be used to incorporate voice communications in devices such as personal data assistants, laptop computers, desktop computers, and the like.

Although Internet protocols, such as VoIP, are used to implement a wide variety of networks (*e.g.* local area networks, wide area networks, and the World Wide Web), alternative communication protocols may also be used to form other types of networks. For example, the Bluetooth standard is commonly used to implement short distance wireless networks having a defined set of member devices, which are sometimes referred to as piconets. Bluetooth compatible devices transmit data and/or voice in the Industrial, Scientific, and Medical (ISM) frequency band at about 2.4 GHz using a frequency-hopping technique. The Bluetooth standard is well known to persons of ordinary skill in the art, and so, in the interest of clarity, only those aspects of the Bluetooth standard that are relevant to the present invention will be discussed herein.

Devices that conform to the Bluetooth standard may transmit voice communications over an air interface, or wireless communication link, using circuit-switching protocols to preserve the real-time nature of the voice. The Bluetooth standard also allows conforming devices to transmit data using an Internet protocol. Due in part to the frequency-hopping characteristics of the Bluetooth standard, the communication link formed according to the Bluetooth standard has a reasonable chance of maintaining link quality in the presence of interference. Thus, the Bluetooth standard is a good candidate for incorporating VoIP-based voice and data communications solutions. However, the current Bluetooth standard also suffers from a number of deficiencies that may interfere with, or prevent, implementation of VoIP-based voice and data communication within the standard.

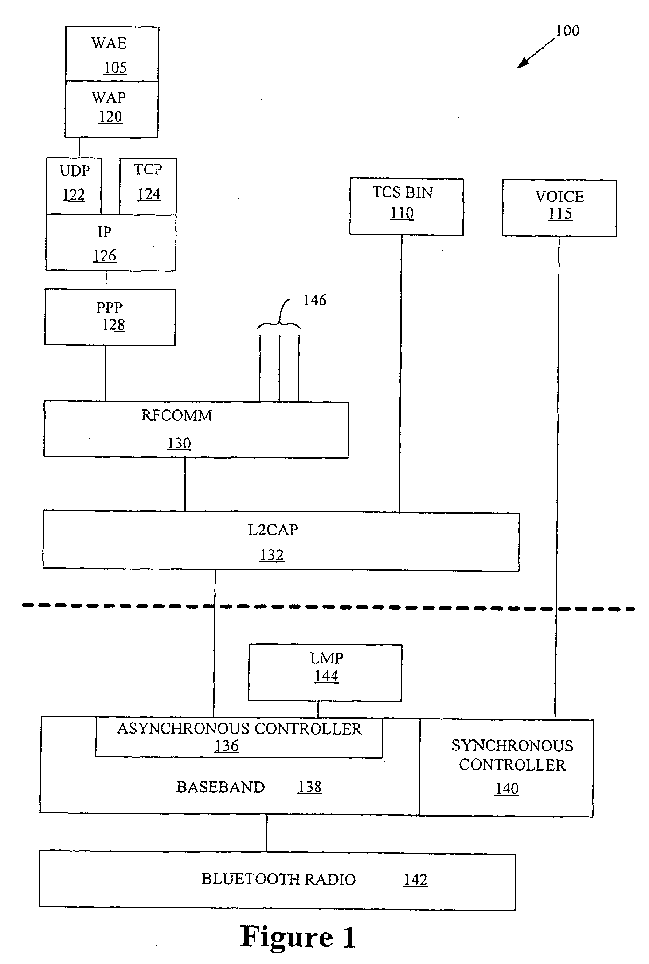

Figure 1 conceptually illustrates a conventional Bluetooth stack 100. Persons of ordinary skill in the art should appreciate that the conventional Bluetooth stack 100 may include additional elements that, in the interest of clarity, are not shown in Figure 1. Persons of ordinary skill in the art should also appreciate that the elements depicted in Figure 1, and/or combinations thereof, may be embodied in a single device or in a plurality of devices. The Bluetooth stack 100 may receive various communications at a Wireless Application Environment (WAE) block 105, a Telephony Control protocol Specification Binary (TCS Bin) block 110, an audio block 115, and/or other blocks defined by the Bluetooth specification.

For one example, packets may be received by the WAE block 110, passed through a Wireless Application Protocol (WAP) block 120, a User Datagram Protocol (UDP) block 122, a Transmission Control Protocol (TCP) block 124, an Internet Protocol (IP) block 126, a Point-to-Point Protocol (PPP) block 128, and then to a Radio Frequency Communication (RFCOMM) block 130, where it may be multiplexed with other packet flows. The RFCOMM block 130 provides a multiplexed signal to a Logical Link Control and Adaptation Protocol (L2CAP) block 132, which may also receive signals from the Transmission Control protocol Specification Binary (TCS Bin) block 110. The L2CAP block 132 provides a signal across a host controller interface 134 to an asynchronous connection controller 136 in a baseband block 138. For another example, audio signals may be received by the audio block 115, which provides a signal to a synchronous controller 140 in the baseband block 138. The synchronous controller 140 typically attempts to maintain predefined quality and delay constraints for the audio signals. The baseband block 138 provides a signal to a Bluetooth radio 142 for transmission over a communication link, also referred to as the air interface, under the control of a Link Management Protocol (LMP) block 144.

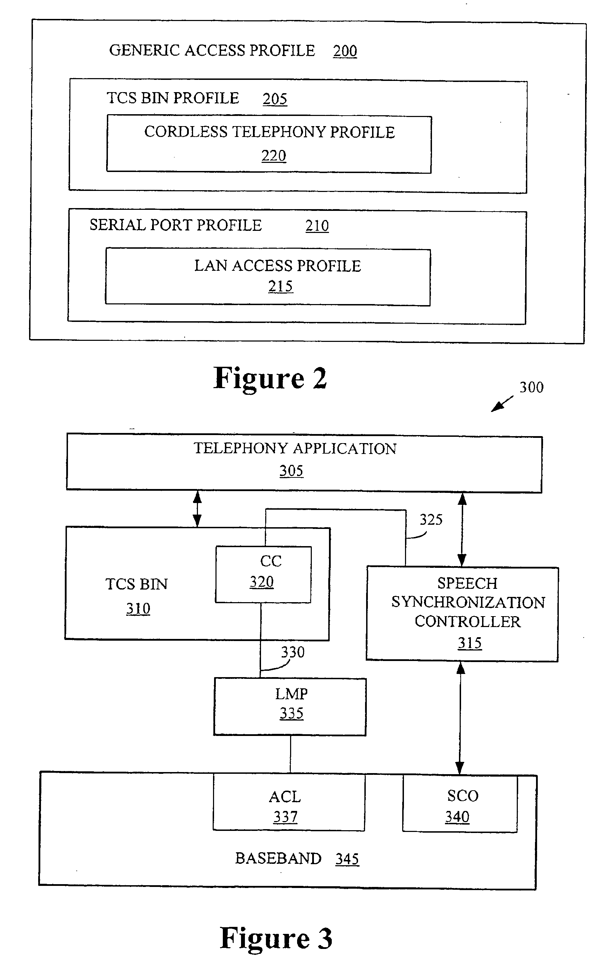

Figure 2 conceptually illustrates a generic access Bluetooth profile 200. Persons of ordinary skill in the art should appreciate that profiles may define options in each protocol layer, as well as parameter ranges for each protocol. Persons of ordinary skill in the art should also appreciate that the generic access Bluetooth profile 200 may include additional profiles that, in the interest of clarity, are not shown in Figure 2. The generic access Bluetooth profile 200 includes a TCS Bin profile 205, a serial port profile 210, and other profiles that may be defined by the Bluetooth standard.

The current Bluetooth standard may provide voice services using either a local area network access profile 215 or a cordless telephony profile 220. The cordless telephony profile 220 is dependent upon the TCS Bin profile 205 and the local area network access profile 215 is dependent upon the serial port profile 210. In accordance with the Bluetooth standard, a first profile is considered to be dependent upon a second profile if the first profile reuses parts of the second profile by implicitly and/or explicitly referencing the second profile. Aspects of the local area network access profile and the cordless telephony profile 220 that are relevant to voice communication are discussed below.

The cordless telephony profile 220 defines two roles: a gateway and a terminal. The cordless telephony profile 220 typically supports a topology including one gateway and a small number of terminals, e.g. between 1 and 7 terminals. The gateway may be coupled to an external network, such as an Internet Protocol based network. The gateway acts as a terminal endpoint from the external network's point of view and handles all interworking towards the network. The gateway is considered a central point with respect to external calls, which means that it handles all set up requests to and/or from the external network. For example, the gateway may receive voice packets that are un-encapsulated native G.711 or G.732 voice packets. Gateway devices may include a public switched telephone network (PSTN) home base station, an Integrated Services Digital Network (ISDN) home base station, a GSM gateway, a satellite gateway, and an H.323 gateway. The terminal is the wireless user terminal, which may include cordless telephones, dual-mode cellular/cordless phones, desktop computers, laptop computers, personal data assistants, and the like. For example, the terminal may be a 3-in-1 phone that operates according to a K3 cordless telephony profile.

Figure 3 conceptually illustrates a K3 cordless telephony profile stack 300, which may be implemented using the cordless telephony profile 200 shown in Figure 2. Persons of ordinary skill in the art should appreciate that only those elements of the K3 cordless telephony profile stack 300 that are relevant to the present invention are illustrative herein. Voice packets are received by a telephony application 305, which provides the voice packets and other control signals to a TCS bin block 310 and a speech synchronization controller 315. A call control (CC) block 320 within the TCS bin block 310 manages a voice channel via an interface 325 with the speech synchronization controller 315 and an interface 330 with a link manager protocol (LMP) block 335. For example, the call control block 320 may connect and/or disconnect internal speech paths by providing signals to the speech synchronization controller 315 via the interface 325 and may establish and/or release voice synchronization control links by providing signals to the link manager protocol (LMP) block 335 via the interface 330. The link manager protocol (LMP) block 335 is coupled to an asynchronous control block 337.

The interfaces 325, 330 enable the speech synchronization controller 315 to directly control the voice path from the telephony application 305 to a synchronous controller 340 in a baseband 345. Thus, the telephony application 305 typically obtains guaranteed quality and/or delay characteristics. However, the ability of the telephony application 305 to provide packet data is compromised because the voice path including the speech synchronization controller 315 does not include any protocol layers for processing packet data. For another example, a phone operating according to a Global System for Mobile Communications (GSM) protocol treats voice applications in a similar manner. Thus, this technique does not permit voice communication from the telephony application 305 to be treated homogeneously with data traffic streams, which may undesirably limit the system flexibility. Consequently, this technique may not take advantage of many of the features of future 4G systems.

Referring back to Figure 2, voice communications may also be provided using the local area network access profile 215 in the serial port profile 210. In this approach, packets received from a VoIP application are treated in the same way as any other local area network access, i.e. the VoIP application is seen as just another Internet application utilizing the Internet Protocol as the preferred transport mechanism. However, this approach does not accord the VoIP application any priorities, quality guarantees, or delay guarantees. For example, the VoIP application is connected via an asynchronous connection at the baseband layer, such as the asynchronous connection 136 in the baseband 138 shown in Figure 1. For another example, packets associated with the VoIP application are contentiously multiplexed with packets from other applications 146 using the RFCOMM serial port, such as the RFCOMM 130 shown in Figure 1. The packets from the other applications 146 may compete and/or conflict with the VoIP application. Using the serial port profile 210 may also clause packets provided by the VoIP application to pass through many more control blocks in the Bluetooth stack.

Melpignano (WO 03/095533 A1) describes a conventional protocol stack that may be used to transmit voice packet data using an asynchronous controller.

The present invention is directed to addressing the effects of one or more of the problems set forth above.

### SUMMARY OF THE INVENTION

In one embodiment of the instant invention, a method is provided for transmitting voice or other time-sensitive packet data over a network in which multiple devices belonging to a defined set communicate with each other. The method includes receiving at least one first packet containing voice data, processing the at least one first packet using a real-time packet-enabled stack to form at least one second packet, and providing the at least one second packet to a synchronous controller for transmission over the network.

In another embodiment of the present invention, a method is provided for receiving voice or other time-sensitive packet data from a first network in which multiple devices belonging to a defined set communicate with each other. The method includes receiving at least one packet containing voice data from the first network, providing the at least one packet to a synchronous controller, and processing the at least one packet using a real-time packet-enabled stack.

### BRIEF DESCRIPTION OF THE DRAWINGS

The invention may be understood by reference to the following description taken in conjunction with the accompanying drawings, in which like reference numerals identify like elements, and in which:
Figure 1 conceptually illustrates a conventional Bluetooth stack;
Figure 2 conceptually illustrates a generic access Bluetooth profile including a serial port profile and a cordless telephony profile;
Figure 3 conceptually illustrates a K3 cordless telephony profile, which may be used as the cordless telephony profile shown in Figure 2;
Figure 4 conceptually illustrates a network in which multiple devices belonging to a defined set communicate with each other, in accordance with the present invention;
Figure 5 conceptually illustrates a Bluetooth stack including a real-time, packet-enabled stack that may be used in the network shown in Figure 4, in accordance with the present invention; and
Figure 6 conceptually illustrates an exemplary embodiment of a cordless telephony profile stack that may be used in the Bluetooth stack shown in Figure 5, in accordance with the present invention.

While the invention is susceptible to various modifications and alternative forms, specific embodiments thereof have been shown by way of example in the drawings and are herein described in detail. It should be understood, however, that the description herein of specific embodiments is not intended to limit the invention to the particular forms disclosed, but on the contrary, the intention is to cover all modifications, equivalents, and alternatives falling within the spirit and scope of the invention as defined by the appended claims.

### DETAILED DESCRIPTION OF SPECIFIC EMBODIMENTS

Illustrative embodiments of the invention are described below. In the interest of clarity, not all features of an actual implementation are described in this specification. It will of course be appreciated that in the development of any such actual embodiment, numerous implementation-specific decisions should be made to achieve the developers' specific goals, such as compliance with system-related and business-related constraints, which will vary from one implementation to another. Moreover, it will be appreciated that such a development effort might be complex and time-consuming, but would nevertheless be a routine undertaking for those of ordinary skill in the art having the benefit of this disclosure.

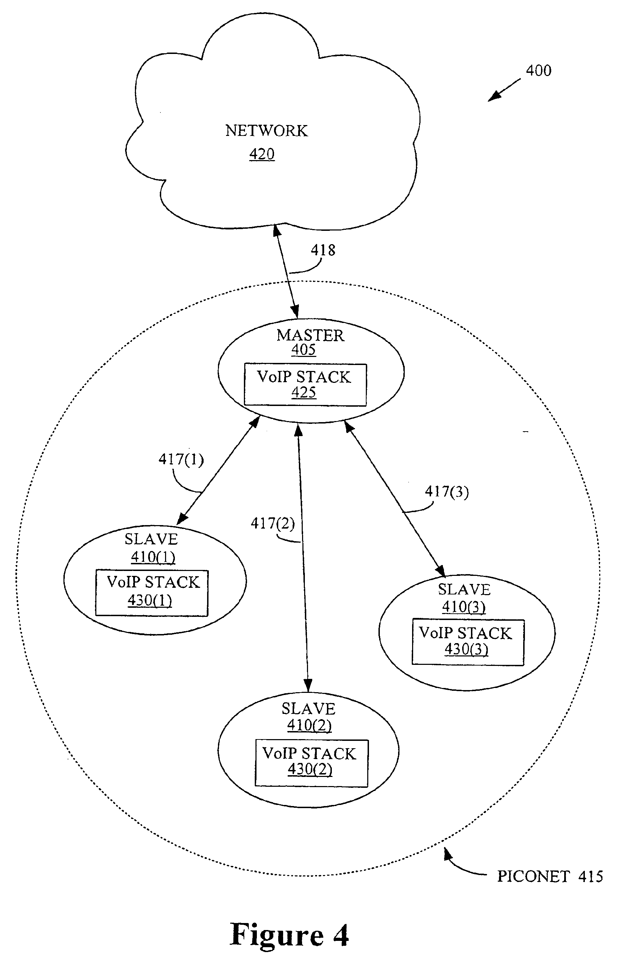

Figure 4 conceptually illustrates a network 400 in which multiple devices 405, 410(1-3) belonging to a defined set 415 communicate with each other. The present invention will be discussed herein in the context of the Bluetooth standard. Thus, in the illustrated embodiment, the defined set 415 is a piconet 415 that conforms to a Bluetooth standard. The multiple devices 405, 410(1-3) are Bluetooth-enabled devices and, in particular, the device 405 is a master and the devices 410(1-3) are slaves. However, the present invention is not limited to the Bluetooth standard. Persons of ordinary skill in the art should appreciate that the Bluetooth standard is merely one example of a standard which may be used to facilitate communication between the multiple devices 405, 410(1-3) belonging to the defined set 415. In alternative embodiments, any desirable standard, such as so-called "network-within-a-network" standards, may be used.

The piconet 415 shown in Figure 4 includes one master 405 and three slaves 410(1-3). However, persons of ordinary skill in the art should appreciate that the present invention is not limited to four devices. In alternative embodiments, more or fewer slaves 410(1-3) may be included in the piconet 415. For example, the Bluetooth standard typically permits between one and seven slaves 410(1-3) to be included in the piconet 415. Each of the slaves 410(1-3) may form a communication link 417(1-3) with the master 405. However, the slaves 410(1-3) typically do not form communication links with other slaves 410(1-3).

The master 405 may also form a communication link 418 with a second network 420. In one embodiment, the second network 420 is also a Bluetooth-enabled network, such as a piconet, in which case the master 405 establishes a communication link with a second master (not shown) in the second network 420. However, the present invention is not limited to communications between Bluetooth-enabled networks. In alternative embodiments, the second network 420 may be any desirable type of network. For example, the second network 420 may include networks conforming to the Internet Protocol, such as a local area network, a wide area network, the World Wide Web, an Integrated Services Digital Network (ISDN) network, an Intranet, and the like. Alternatively, the second network 420 may include a Public Switched Telephone Network, a plain old telephone service (POTS) network, a cordless telephone network, a cellular telephone network, a satellite network, and the like. Persons of ordinary skill in the art should appreciate that the second network 420 may also be formed of various combinations of the aforementioned networks.

The master 405 includes a real-time, packet-enabled stack 425 and each of the slaves 410(1-3) includes a real-time, packet-enabled stack 430(1-3). The real-time, packet-enabled stacks 425, 430(1-3) are a set of network protocol layers that work together, as will be discussed in detail below. However, persons of ordinary skill in the art should appreciate that the term stack may also refer to the actual software and/or hardware that processes the protocols defined by the real-time, packet-enabled stacks 425, 430(1-3). Some portions of the detailed descriptions herein are consequently presented in terms of a software implemented process involving symbolic representations of operations on data bits within a memory in a computing system or a computing device. These descriptions and representations are the means used by those in the art to most effectively convey the substance of their work to others skilled in the art. The process and operation require physical manipulations of physical quantities. Usually, though not necessarily, these quantities take the form of electrical, magnetic, or optical signals capable of being stored, transferred, combined, compared, and otherwise manipulated. It has proven convenient at times, principally for reasons of common usage, to refer to these signals as bits, values, elements, symbols, characters, terms, numbers, or the like.

It should be borne in mind, however, that all of these and similar terms are to be associated with the appropriate physical quantities and are merely convenient labels applied to these quantifies. Unless specifically stated or otherwise as may be apparent, throughout the present disclosure, these descriptions refer to the action and processes of an electronic device, that manipulates and transforms data represented as physical (electronic, magnetic, or optical) quantities within some electronic device's storage into other data similarly represented as physical quantities within the storage, or in transmission or display devices. Exemplary of the terms denoting such a description are, without limitation, the terms "processing," "computing," "calculating," "determining," "displaying," and the like.

Note also that the software implemented aspects of the invention are typically encoded on some form of program storage medium or implemented over some type of transmission medium. The program storage medium may be magnetic (e.g., a floppy disk or a hard drive) or optical (e.g., a compact disk read only memory, or "CD ROM"), and may be read only or random access. Similarly, the transmission medium may be twisted wire pairs, coaxial cable, optical fiber, wireless communication link (sometimes referred to as an "air interface"), or some other suitable transmission medium known to the art. The invention is not limited by these aspects of any given implementation.

The real-time, packet-enabled stacks 425, 430(1-3) are used for exchanging voice data over the communication links 417(1-3), 418. In one embodiment, the real-time, packet-enabled stacks 425, 430(1-3) process voice packet data according to the Voice over Internet Protocol (VoIP). However, the present invention is not limited to VoIP and, in alternative embodiments, any desirable protocol may be implemented in the real-time, packet-enabled stacks 425 430(1-3) to process the voice packet data.

By processing the voice packet data using the real-time, packet-enabled stacks 425, 430(1-3), the master 405 and the slaves 410(1-3) may provide quality guarantees and/or delay guarantees that are desirable when transmitting voice packet data between the master 405 and one or more of the slaves 410(1-3), or between the master 405 and the second network 420. Moreover, the voice packets processed by the master 405 and the slaves 410(1-3) may be processed at a higher priority than data packets that are not as time-critical.

In one embodiment, the piconet 415 may be used to extend or augment existing telephone networks, such as the second network 420. Extending or augmenting the second network 420 using the piconet 415 may be substantially less expensive than directly extending or augmenting the second network 420. For example, it may be prohibitively expensive to extend or augment a cellular telephone network in an office building by installing additional cellular telephone towers dedicated to the office building. A piconet 415 including the real-time, packet-enabled stacks 425, 430(1-3) may be much less expensive to install.

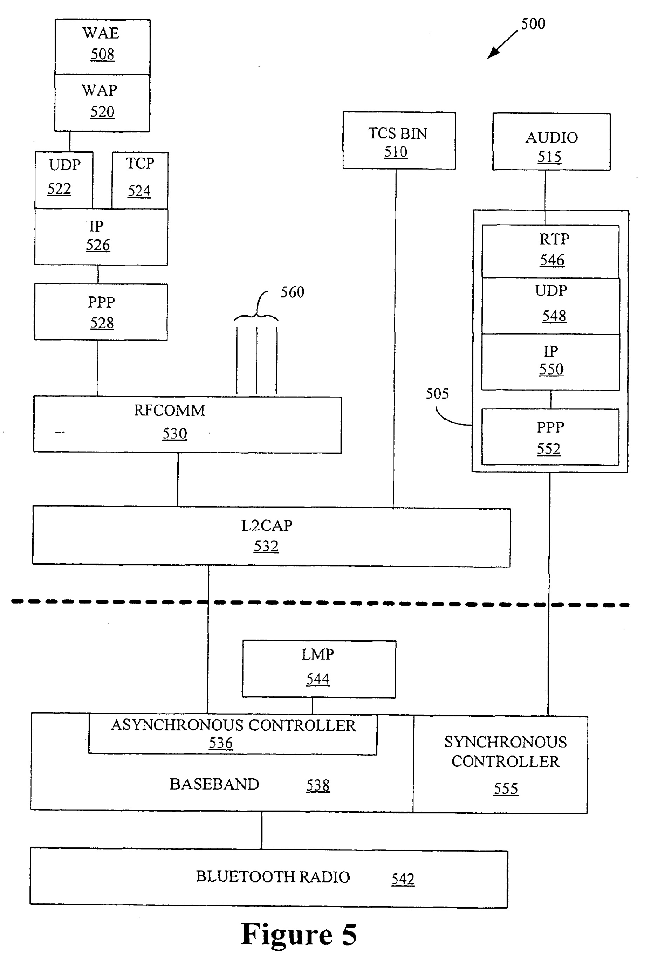

Figure 5 conceptually illustrates a Bluetooth stack 500 including a real-time, packet-enabled stack 505. As discussed above, the Bluetooth stack 500 may include a WAE block 508, a TCS Bin block 510, an audio block 515, a WAP block 520, a User Datagram Protocol (UDP) block 522, a Transmission Control Protocol (TCP) block 524, an Internet Protocol (IP) block 526, a Point-to-Point Protocol (PPP) block 528, a Radio Frequency Communication protocol (RFCOMM) block 530, a Logical Link Control and Adaptation Protocol (L2CAP) block 532, a host controller interface 534, an asynchronous connection controller 536, a baseband block 538, a Link Management Protocol block 540, and a Bluetooth radio 542 for transmitting symbols over a communication link in the air interface.

When the Bluetooth stack 500 is used in a transmitter mode, the audio block 515 receives and processes one or more voice packets. Persons of ordinary skill in the art should appreciate that processing the one or more voice packets may include such operations as adding or removing a header, routing the one or more voice packets, concatenating two or more of the voice packets, splitting the voice packet, or modifying the voice packets in any other manner. The audio block 515 then provides the one or more voice packets to the real-time, packet-enabled stack 505. In the illustrated embodiment, the real-time, packet-enabled stack 505 includes a Real-Time Transport (RTP) protocol block 546, a User Datagram Protocol (UDP) block 548, an Internet Protocol (IP) block 550, and a Point-to-Point Protocol (PPP) block 552.

However, the present invention is not limited to this particular set of protocols and, in alternative embodiments, the real-time, packet-enabled stack 505 may use any desirable combination of protocol layers to implement real-time processing of the voice packets. Moreover, in one alternative embodiment, the real-time, packet-enabled stack 505 may be bifurcated so that a first branch handles native voice processing and a second branch is reserved for bandwidth partitioning. For example, multiplexed time-sensitive Internet Protocol data flows may be handled by a bifurcated real-time, packet-enabled stack 505.

The real-time, packet-enabled stack 505 provides the processed voice packets to a synchronous controller 555. The synchronous controller 555 attempts to maintain predefined quality and delay constraints for the voice packets. The voice packets received by the synchronous controller 555 are given a higher priority than packets received by the asynchronous controller 536. Furthermore, the voice packets processed by the real-time, packet-enabled stack 505 and the synchronous controller 555 may not conflict and/or compete with packets from other applications 560. The synchronous controller 555 and the baseband block 538 then provide a signal based upon the one or more voice packets to the Bluetooth radio 542 for transmission over the air interface.

When the Bluetooth stack 500 is used in a reception mode, the Bluetooth radio 542 receives one or more voice packets over the air interface and provides the one or more received voice packets to the synchronous controller 555 in the baseband 538. As discussed above, the synchronous controller 555 may prioritize the received voice packets and may also provide quality guarantees and/or delay guarantees for the received voice packets. The synchronous controller 555 processes the received voice packets and then provides them to the real-time, packet-enabled stack 505, which further processes the received voice packets then provides them to the audio block 515. One or more signals from the audio block 515 may then be provided to a relay (not shown) for transmission to an outside network, such as the second network 420 shown in Figure 4.

The voice packets have a natural identifiable mapping to the interfacing systems described above because the voice packets include a synchronization control object (SCO) handle. Thus, at least in part because of the identifiable SCO handle, additional enhancements may be made to the voice service by binding additional control protocols to the SCO handle. For example, additional protocol extensions, wherein a control type field has been exposed to the TCS Bin block 510 via suitable protocol extensions, may be combined with additional VoIP signaling protocols, such as SIP. Moreover, mobility may also be extended in a similar manner by including field extensions that indicate a mobile Internet Protocol instead of standard cellular mobility.

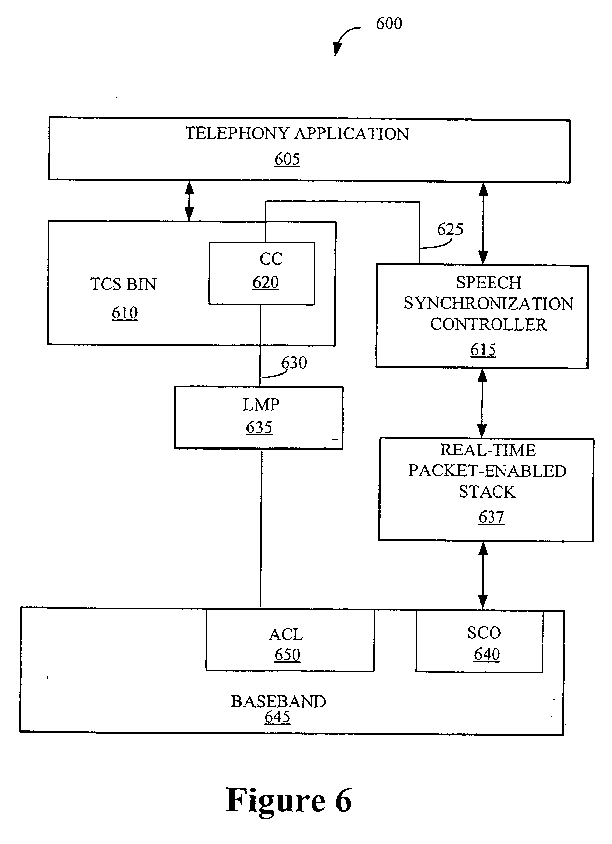

Figure 6 conceptually illustrates an exemplary embodiment of a cordless telephony profile stack 600. Persons of ordinary skill in the art should appreciate that only those elements of the cordless telephony profile 600 that are relevant to the present invention are illustrative herein. In the interest of clarity, the operation of the cordless telephony profile 600 will be described for a device operating in a transmitting mode. However, persons of ordinary skill in the art should appreciate that the cordless telephony profile 600 may also operate in a reception mode, such as described in detail above.

In operation, a telephony application 605 forms and/or provides one or more voice packets and other control signals to a TCS bin block 610 and a speech synchronization controller 615. For example, the telephony application 605 may be an Internet phone application that provides at least one packet conforming to the Voice over Internet Protocol. A call control (CC) block 620 within the TCS bin block 610 manages the voice channel via an interface 625 with the speech synchronization controller 615. The call control (CC) block 620 also manages the voice channel via an interface 630 with a link manager protocol (LMP) block 635. For example, the call control block 620 may connect and/or disconnect internal speech paths by providing signals to the speech synchronization controller 615 via the interface 625. The call control block 620 may also establish and/or release voice synchronization control links by providing signals to the link manager protocol block 635 via the interface 630.

The interfaces 625, 630 enable the speech synchronization controller 615 to directly control the voice path from the telephony application 605 to a real-time, packet-enabled stack 637 and a synchronous controller 640 in a baseband 645. Thus, the telephony application 605 obtains a guaranteed quality and/or a guaranteed delay for voice packets transmitted by the cordless telephony stack 600. The voice packets provided by the telephony application 605 may also be treated with a higher priority than other, less time-sensitive, data packets. Thus, this technique permits voice packets from the telephony application 605 to be treated homogeneously with data traffic streams, such as data packets processed by an asynchronous controller 650 in the baseband 645. Consequently, the cordless telephony profile 600 including the real-time, packet-enabled stack 637 may be particularly well suited for adoption in future 4G systems.

The particular embodiments disclosed above are illustrative only, as the invention may be modified and practiced in different but equivalent manners apparent to those skilled in the art having the benefit of the teachings herein. Furthermore, no limitations are intended to the details of construction or design herein shown, other than as described in the claims below. It is therefore evident that the particular embodiments disclosed above may be altered or modified and all such variations are considered within the scope of the invention. Accordingly, the protection sought herein is as set forth in the claims below.

## Claims

1. A method for transmitting time-sensitive packet data over a network (400) in which multiple devices (405, 410) belonging to a defined set (415) communicate with each other using a Bluetooth stack (500), the defined set (415) being a piconet (415) that conforms to a Bluetooth standard, the method being implemented in a first device from the defined set and **characterized by**:
receiving, at a first protocol stack implemented in the first device, at least one first packet data containing voice data;
processing the at least one first packet using a real-time packet-enabled stack (425, 430) to form at least one second packet, the real-time packet-enabled stack being implemented in the first protocol stack;
providing the at least one second packet to a synchronous controller (555) in the first protocol stack for transmission over the network;
prioritizing the at least one second packet over at least one data packet processed at a second protocol stack including an asynchronous controller (536); and
providing, by the synchronous controller and a baseband block (538), a signal based upon the at least one second packet to a Bluetooth radio (542) for transmission over an air interface.

2. The method of claim 1, where in receiving the at least one first packet comprises receiving the at least one first packet from a telephony application (605).

3. The method of claim 1, wherein processing the at least one first packet using the real-time packet-enabled stack comprises processing the at least one first packet using at least one of a Real-Time Transport Protocol stack (546), a User Datagram Protocol stack (548), an Internet Protocol stack (550), and a Point-to-Point Protocol stack (552).

4. The method of claim 1, wherein providing the at least one second packet to the synchronous controller comprises providing the at least one second packet to a synchronous controller in a baseband stack (538).

5. The method of claim 1, comprising transmitting a signal based upon the at least one second packet provided to the synchronous controller over a wireless network.

6. A method for receiving time-sensitive packet data from a first network (420) in which multiple devices (405, 410) belonging to a defined set (415) communicate with each other using a Bluetooth stack (500) the defined set (415) being a piconet (415) that conforms to a Bluetooth standard, the method being implemented in a first device from the defined set and **characterized by**:
receiving, by a Bluetooth radio (542), over an air interface, at a baseband stack that is part of a first protocol stack in the first device, at least one packet containing voice data from the first network;
providing the at least one packet to a synchronous controller (555) in the first protocol stack;
processing the at least one packet using real-time packet-enabled stack (425, 430); and
prioritizing the at least one packet over at least one data packet processed at a second protocol stack including an asynchronous controller (536).

7. The method of claim 6, wherein receiving the at least one packet from the first network comprises receiving the at least one packet from a first wireless network.

8. The method of claim 7, wherein receiving the at least one packet over the first wireless network comprises receiving the at least one packet from a Bluetooth network using a Bluetooth radio (542).

9. The method of claim 6, wherein providing the at least one packet to the synchronous controller comprises providing the at least one packet to the synchronous controller in a Bluetooth stack.

10. The method of claim 6, comprising relaying the at least one packet to a second network.

## Patentansprüche

1. Verfahren zur Übertragung von zeitkritischen Datenpaketen über ein Netzwerk (400), in dem mehrere Vorrichtungen (405, 410), welche einem definierten Satz (415) angehören, unter Verwendung eines Bluetooth-Stacks (500) miteinander kommunizieren, wobei der definierte Satz (415) ein Piconetzwerk (415) ist, welches einem Bluetooth-Standard entspricht, wobei das Verfahren in einer ersten Vorrichtung aus dem definierten Satz implementiert wird und **gekennzeichnet ist durch**:
Empfangen, an einem ersten in der ersten Vorrichtung implementierten Protokoll-Stack, mindestens eines ersten Datenpakets, welches Sprachdaten enthält;
Verarbeiten des mindestens einen ersten Pakets unter Verwendung eines Echtzeit-paketfähigen Stacks (425, 430), um mindestens ein zweites Paket zu bilden, wobei der Echtzeit-paketfähige Stack in dem ersten Protokoll-Stack implementiert wird;
Bereitstellen des mindestens einen zweiten Pakets an eine Synchronsteuereinrichtung (555) in dem ersten Protokoll-Stack für die Übertragung über das Netzwerk;
Priorisieren des mindestens einen zweiten Pakets gegenüber mindestens einem an einem zweiten Protokoll-Stack, welcher eine Synchronsteuereinrichtung (536) umfasst, verarbeiteten Datenpaket; und
Bereitstellen, **durch** die Synchronsteuereinrichtung und einen Basisband-Block (538), eines Signals auf der Basis des mindestens einen zweiten Pakets an ein Bluetooth-Radio (542) zur Übertragung über eine Luftschnittstelle.

2. Verfahren nach Anspruch 1, wobei der Empfang des mindestens einen ersten Pakets den Empfang des mindestens einen ersten Pakets von einer Telefonieanwendung (605) umfasst.

3. Verfahren nach Anspruch 1, wobei das Verarbeiten des mindestens einen ersten Pakets unter Verwendung des Echtzeit-paketfähigen Stacks das Verarbeiten des mindestens einen ersten Pakets unter Verwendung mindestens eines der folgenden umfasst: ein Echtzeit-Transportprotokoll-Stack (546), ein Benutzerdatensegmentprotokoll-Stack (548), ein Internetprotokoll-Stack (550) und ein Punkt-zu-Punkt-Protokoll-Stack (552).

4. Verfahren nach Anspruch 1, wobei das Bereitstellen des mindestens einen zweiten Pakets an die Synchronsteuereinrichtung das Bereitstellen des mindestens einen zweiten Pakets an die Synchronsteuereinrichtung in einem Basisband-Stack (538) umfasst.

5. Verfahren nach Anspruch 1, umfassend das Übertragen eines Signals auf der Basis des mindestens einen an die Synchronsteuereinrichtung bereitgestellten zweiten Pakets über ein drahtloses Netzwerk.

6. Verfahren für den Empfang von zeitkritischen Datenpaketen von einem ersten Netzwerk (420), in dem mehrere Vorrichtungen (405, 410), welche einem definierten Satz (415) angehören, unter Verwendung eines Bluetooth-Stacks (500) miteinander kommunizieren, wobei der definierte Satz (415) ein Piconetzwerk (415) ist, welches einem Bluetooth-Standard entspricht, wobei das Verfahren in einer ersten Vorrichtung aus dem definierten Satz implementiert wird und **gekennzeichnet ist durch**:
Empfangen, **durch** ein Bluetooth-Radio (542) über eine Luftschnittstelle, an einem Basisband-Stack, welcher Teil eines ersten Protokoll-Stacks in der ersten Vorrichtung ist, mindestens eines Pakets, welches Sprachdaten enthält;
Bereitstellen des mindestens einen Pakets an eine Synchronsteuereinrichtung (555) in dem ersten Protokoll-Stack;
Verarbeiten des mindestens einen Pakets unter Verwendung eines Echtzeit-paketfähigen Stacks (425, 430); und
Priorisieren des mindestens einen Pakets gegenüber mindestens einem an einem zweiten Protokoll-Stack, welcher eine Synchronsteuereinrichtung (536) umfasst, verarbeiteten Datenpaket.

7. Verfahren nach Anspruch 6, wobei das Empfangen des mindestens einen Pakets von dem ersten Netzwerk das Empfangen des mindestens einen Pakets von einem ersten drahtlosen Netzwerk umfasst.

8. Verfahren nach Anspruch 7, wobei das Empfangen des mindestens einen Pakets über das erste drahtlose Netzwerk das Empfangen des mindestens einen Pakets von einem Bluetooth-Netzwerk unter Verwendung eines Bluetooth-Radios (542) umfasst.

9. Verfahren nach Anspruch 6, wobei das Bereitstellen des mindestens einen Pakets an die Synchronsteuereinrichtung das Bereitstellen des mindestens einen Pakets an die Synchronsteuereinrichtung in einem Bluetooth-Stack umfasst.

10. Verfahren nach Anspruch 6, umfassend das Weiterleiten des mindestens einen Pakets an ein zweites Netzwerk.

## Revendications

1. Procédé de transmission de données par paquets sensibles au temps sur un réseau (400) dans lequel des dispositifs multiples (405, 410) appartenant à un ensemble défini (415) communiquent entre eux au moyen d'une pile Bluetooth (500), l'ensemble défini (415) étant un picoréseau (415) qui est conforme à une norme Bluetooth, le procédé étant mis en oeuvre dans un premier dispositif à partir de l'ensemble défini et **caractérisé par** les étapes suivantes:
recevoir, au niveau d'une première pile de protocoles mise en oeuvre dans le premier dispositif, au moins des premières données par paquets contenant des données vocales ;
traiter l'au moins un premier paquet en utilisant une pile activée par paquets en temps réel (425, 430) pour former au moins un deuxième paquet, la pile activée par paquets en temps réel étant mise en oeuvre dans la première pile de protocoles ;
fournir l'au moins un deuxième paquet à un contrôleur synchrone (555) dans la première pile de protocoles pour une transmission sur le réseau ;
rendre prioritaire l'au moins un deuxième paquet par rapport à au moins un paquet de données traité au niveau d'une deuxième pile de protocoles comprenant un contrôleur asynchrone (536) ; et
fournir, par le contrôleur synchrone et un bloc de bande de base (538), un signal basé sur l'au moins un deuxième paquet à une radio Bluetooth (542) pour une transmission sur une interface hertzienne.

2. Procédé selon la revendication 1, dans lequel la réception de l'au moins un premier paquet comprend la réception de l'au moins un premier paquet à partir d'une application de téléphonie (605)

3. Procédé selon la revendication 1, dans lequel le traitement de l'au moins un premier paquet au moyen de la pile activée par paquets en temps réel comprend le traitement de l'au moins un premier paquet au moyen d'au moins une pile parmi une pile de protocoles de transport en temps réel (546), une pile de protocoles de datagramme utilisateur (548), une pile de protocoles Internet (550) et une pile de protocoles point à point (552).

4. Procédé selon la revendication 1, dans lequel la fourniture de l'au moins un deuxième paquet au contrôleur synchrone comprend la fourniture de l'au moins un deuxième paquet à un contrôleur synchrone dans une pile de bandes de base (538).

5. Procédé selon la revendication 1, comprenant la transmission d'un signal basé sur l'au moins un deuxième paquet fourni au contrôleur synchrone sur un réseau sans fil.

6. Procédé de réception de données par paquets sensibles au temps à partir d'un premier réseau (420) dans lequel des dispositifs multiples (405, 410) appartenant à un ensemble défini (415) communiquent entre eux au moyen d'une pile Bluetooth (500), l'ensemble défini (415) étant un picoréseau (415) qui est conforme à une norme Bluetooth, le procédé étant mis en oeuvre dans un premier dispositif à partir de l'ensemble défini et **caractérisé par** les étapes suivantes :
recevoir, au moyen d'une radio Bluetooth (542), sur une interface hertzienne, au niveau d'une pile de bandes de base qui fait partie d'une première pile de protocoles dans le premier dispositif, au moins un paquet contenant des données vocales à partir du premier réseau ;
fournir l'au moins un paquet à un contrôleur synchrone (555) dans la première pile de protocoles ;
traiter l'au moins un paquet au moyen d'une pile activée par paquets en temps réel (425, 430) ; et
rendre prioritaire l'au moins un paquet par rapport à au moins un paquet de données traité au niveau d'une deuxième pile de protocoles comprenant un contrôleur asynchrone (536).

7. Procédé selon la revendication 6, dans lequel la réception de l'au moins un paquet à partir du premier réseau comprend la réception de l'au moins un paquet à partir d'un premier réseau sans fil.

8. Procédé selon la revendication 7, dans lequel la réception de l'au moins un paquet sur le premier réseau sans fil comprend la réception de l'au moins un paquet à partir d'un réseau Bluetooth au moyen d'une radio Bluetooth (542).

9. Procédé selon la revendication 6, dans lequel la fourniture de l'au moins un paquet au contrôleur synchrone comprend la fourniture de l'au moins un paquet au contrôleur synchrone dans une pile Bluetooth.

10. Procédé selon la revendication 6, consistant à relayer l'au moins un paquet vers un deuxième réseau.
